# EUROPÄISCHE PATENTSCHRIFT

(11) **EP 3 108 331 B1**
(45) Veröffentlichungstag und Bekanntmachung des Hinweises auf die Patenterteilung: **08.04.2020**
(21) Anmeldenummer: 15705233.3
(22) Anmeldetag: 09.02.2015
(51) Int. Cl.: G06F 3/01, G06F 3/023

(54) **ANWENDERSCHNITTSTELLE UND VERFAHREN ZUM BERÜHRUNGSLOSEN BEDIENEN EINES IN HARDWARE AUSGESTALTETEN BEDIENELEMENTES IN EINEM 3D-GESTENMODUS**
USER INTERFACE AND METHOD FOR CONTACTLESSLY OPERATING A HARDWARE OPERATING ELEMENT IN A 3-D GESTURE MODE
INTERFACE UTILISATEUR ET PROCÉDÉ POUR COMMANDER SANS CONTACT UN ÉLÉMENT DE COMMANDE INTÉGRÉ DANS UN ÉQUIPEMENT SELON UN MODE GESTUEL EN 3D

(30) Priorität: 17.02.2014 DE 102014202834
(43) Veröffentlichungstag der Anmeldung: 28.12.2016
(73) Patentinhaber: Volkswagen Aktiengesellschaft, 38440 Wolfsburg (DE)
(72) Erfinder: WILD, Holger, 10179 Berlin (DE); CZELNIK, Mark Peter, 38444 Wolfsburg (DE)
(86) Internationale Anmeldenummer: PCT/EP2015/052601
(87) Internationale Veröffentlichungsnummer: WO 2015/121187

(56) Entgegenhaltungen:
- WO-A1-01/30051
- WO-A1-2012/115307
- WO-A1-2014/000060
- DE-A1-102009 038 895
- US-A1- 2012 038 496

## Beschreibung

### Stand der Technik

Die vorliegende Erfindung betrifft eine Anwenderschnittstelle sowie ein Verfahren zur berührungslosen Bedienung eines in Hardware ausgestalteten Bedienelementes ("Knopf", "Schieberegler", "Dreh-/Drücksteller" etc.) einer Anwenderschnittstelle. Insbesondere betrifft die vorliegende Erfindung ein neues Verfahren zur berührungslosen Interaktion mit einem solchen Knopf.

Die Gestenbedienung im freien Raum erfreut sich immer größerer Beliebtheit. Mittels solcher Gesten können Anwender mit Mensch-Maschine-Schnittstellen kommunizieren, ohne körperlichen Kontakt mit der Eingabeeinrichtung zu haben. Beispielsweise über optische und/oder Infrarot-basierte Systeme wird die Geste erkannt und in Steuerbefehle umgewandelt. Bislang beschränkte sich die Gestenbedienung lediglich auf in Software dargestellte Schaltflächen und andere Interaktionsbereiche.

DE 10 2012 000 263 A1 offenbart ein Verfahren und eine Vorrichtung zum Bedienen von Funktionen in einem Fahrzeug unter Verwendung von im dreidimensionalem Raum ausgeführten Gesten. Wird durch eine im Dachbereich des Fahrzeugs angeordnete Erfassungseinrichtung eine Hand des Nutzers für eine erste vorbestimmte Zeitdauer in einem gültigen Erfassungsbereich detektiert, wird eine Gestensteuerung aktiviert.

DE 10 2006 037 156 A1 beschreibt eine interaktive Bedienvorrichtung, durch welche die Gestenbedienung eines auf einer Anzeigevorrichtung dargestellten grafischen Inhaltes ermöglicht wird. In Abhängigkeit einer ermittelten Bedienabsicht wird der auf der Anzeigevorrichtung dargestellte grafische Inhalt für das Aktivieren einer mit ihm assoziierten Funktion optimiert dargestellt. Beispielsweise wird bei der Annäherung an eine Schaltfläche die Schaltfläche vergrößert dargestellt.

DE 10 2009 008 041 A1 offenbart ein Verfahren zur Bedienung eines Kraftfahrzeugs mit einem Touchscreen, bei welchem eine Annäherungssensorik zur Erkennung einer Geste für die Ausführung bzw. Initialisierung der Ausführung einer Funktion des Kraftfahrzeugs vorgesehen ist. Wird in der Umgebung des Touchscreens eine Geste einer Hand ohne Berührung des Touchscreens ausgeführt, wird die Funktion des Kraftfahrzeugs ausgeführt.

US 2012/0038496 A1 offenbart eine Computertastatur mit Gestenerkennung. Zusätzlich zu in herkömmlicher Weise ausgeführten berührenden Betätigungen einzelner Tasten werden auch berührungslos im Bereich der Tastatur ausgeführte Anwendergesten erfasst und zur Bedienung eines Computers verwendet. Ganz generell wird offenbart, dass ein akustisches oder optisches Feedback die Bereitschaft der Tastatur zur Eingabe oder das tatsächliche Empfangen einer Gesteneingabe anzeigen kann.

WO 2014/00060 A1 offenbart eine Anwenderschnittstelle für einen Rechner mit Näherungssensoren, wobei Anwendergesten in einem vordefinierten Bereich zu Rückmeldungen über die Position der Hand des Anwenders führen. Erst wenn der Anwender die Eingabeeinrichtung berührt, kann eine sichtbare Rückmeldung bezüglich eines Oberflächenbereiches, welcher vom Anwender berührt worden ist, hervorgehoben werden.

WO 2012/115307 A1 offenbart eine Vorrichtung und ein Verfahren zum Bereitstellen einer virtuellen Tastatur, um auf in Hardware ausgestaltete Bedienelemente vollständig verzichten zu können.

DE 10 2009 038 895 A1 offenbart ein Verfahren zum Unterstützen eines Bedienens von zumindest einer Einrichtung eines Fahrzeugs, wobei ein Bedienelement zur Entgegennahme berührender Anwendereingaben mit einem Näherungssensor ausgestattet wird. Detektiert der Näherungssensor eine Annäherung des Anwenders (Bedienabsicht), erzeugt ein Steuergerät auf einem Bildschirm eine Anzeige mit Informationen über die möglichen Eingabeformen.

Die technischen Möglichkeiten werden durch den zuvor genannten Stand der Technik lediglich unvollständig ausgeschöpft. Es ist daher eine Aufgabe der vorliegenden Erfindung, den vorstehend aufgezeigten Bedarf zu stillen.

### Offenbarung der Erfindung

Die vorstehend genannte Aufgabe wird erfindungsgemäß durch ein Verfahren mit den Merkmalen gemäß Anspruch 1 sowie durch eine Anwenderschnittstelle mit den Merkmalen gemäß Anspruch 8 gelöst. Zudem werden ein Anwenderendgerät, ein Computerprogrammprodukt, eine Signalfolge und ein Fortbewegungsmittel zur Lösung dieser Aufgabe vorgeschlagen. Das Verfahren dient der berührungslosen Bedienung eines in Hardware ausgestalteten Bedienelementes. Als in Hardware ausgestaltetes Bedienelement (der Einfachheit halber im Weiteren häufig als "Knopf" bezeichnet) sei im Rahmen der vorliegenden Erfindung ein solches Element verstanden, dessen Erscheinung nicht im Wesentlichen durch einen hinter ihm liegenden Bildschirm bestimmt wird, wie es bei transparenten, berührungsempfindlichen Oberflächen sogenannter Touch-Screens der Fall ist. Solche Bedienelemente sind in modernen Fahrzeugen in großer Vielzahl und Variantenvielfalt vorgesehen, um beispielsweise Sitzeinstellungen, Klimaeinstellung, Einstellungen der Musikwiedergabe etc. zu ermöglichen. Lediglich beispielsweise werden die bekannten Formen "Taster", "Druckknopf', "Drehknopf", "Dreh-Drück-Knopf" und "Schieberegler" ("Slider") genannt. Die erfindungsgemäß adressierte Anwenderschnittstelle ist überdies eingerichtet, in einem 3D-Gesten-Modus auch frei im Raum ausgeführte Gesten ("3D-Gesten") zu erkennen und als Steuerbefehle entgegenzunehmen. Hierzu wird in einem ersten Schritt die Hand eines Anwenders sensorisch erfasst. Als Sensor kommen im Stand der Technik insbesondere optische und/oder Infrarot-basierte Systeme zum Einsatz, ohne dass die Erfindung auf diese Ausführungsformen beschränkt ist. Der Sensor hat einen Erfassungsbereich, in welchem er durch die Hand des Anwenders ausgeführte Gesten hinreichend hoch aufgelöst erfassen kann, um sie hinsichtlich vordefinierter Referenzen klassifizieren bzw. beurteilen zu können. In einem zweiten Schritt wird die Hand zu einem dem Knopf zugeordneten Bereich der Anwenderschnittstelle zugeordnet. Mit anderen Worten wird ein Teilbereich des sensorisch überwachten Erfassungsbereiches dem Knopf zugeordnet, so dass auch auf eine mit dem Knopf assoziierte Funktion über den Teilbereich des Erfassungsbereiches zugegriffen werden kann. Bevorzugt korrespondieren der 3D-Erfassungsbereich und ein auf einer Anzeige der Anwenderschnittstelle dargestellter Bereich einer grafischen Benutzeroberfläche derart miteinander, dass einem jeden Bereich auf der grafischen Benutzeroberfläche ein jeweiliger Teilbereich des sensorisch überwachten Erfassungsbereiches entspricht. In diesem Fall ist dem Knopf auch ein entsprechender Bereich auf der grafischen Benutzeroberfläche zugeordnet. Wird nun die Hand in einem dem Knopf zugeordneten Bereich (des Erfassungsbereiches bzw. der grafischen Benutzeroberfläche) zugeordnet, wird ein Hinweis an den Anwender ausgegeben. Mit anderen Worten wird der Anwender über die Tatsache informiert, dass seine Hand denjenigen Erfassungsbereich erreicht hat, welcher dem Knopf zugeordnet ist. Auf diese Weise werden unterschiedliche Bedienschritte ermöglicht, welche im Laufe der vorliegenden Beschreibung der Erfindung im Detail beschrieben werden. Zumindest ist der Anwender durch die vorliegende Erfindung darüber informiert, ob eine berührungslose Interaktion mit dem Knopf aktuell bereits stattfinden kann oder ob seine Hand hierzu erst in den dem Knopf zugeordneten Bereich eindringen muss.

Hat der Anwender, wie oben beschrieben, seine Hand in dem dem Knopf zugeordneten Bereich angeordnet, kann er eine Geste zum Starten einer dem Knopf zugeordneten Funktion ausführen. Eine solche Geste kann beispielsweise eine Tipp-Geste (auch "Klick-Geste"), eine Zug- und/oder Abwurf (Drag and Drop)-Geste, eine Langdruck (Englisch "Long Press")-Geste o.Ä. sein. Die assoziierte Funktion des Knopfes kann beispielsweise das Aufrufen eines dem Knopf zugeordneten Menüpunktes (z.B. "Navigation", "Radio", "Bordcomputer", "Verkehrsmeldungen" o.Ä.) sein. Auf diese Weise muss der Anwender den Knopf nicht berühren und daher auch nicht seine komfortable Sitzposition verlassen, um die mit dem Knopf assoziierte Funktion zu starten. Auf diese Weise lässt sich die Verkehrssicherheit eines erfindungsgemäß ausgestalteten Fortbewegungsmittels erhöhen, da die Sitzposition des Fahrers weniger stark für die Bedienung des Knopfes verändert werden muss.

Die Unteransprüche zeigen bevorzugte Weiterbildungen der Erfindung.

Der dem Knopf zugeordnete Bereich des Erfassungsbereiches kann in einem Randbereich des Erfassungsbereiches liegen. Ein solcher Bereich ist üblicherweise auch einem Randbereich einer auf einer Anzeigeeinheit dargestellten grafischen Benutzeroberfläche zugeordnet. Da innerhalb der Grenzen einer Anzeigeeinheit üblicherweise keine Knöpfe angeordnet sind (Bildschirme sind stets geschlossene Flächen), die Anzeigeeinheiten jedoch häufig durch Hardware-Bedienelemente gesäumt sind, ergibt sich eine besonders intuitiv erfassbare Zuordnung. Besonders intuitiv wird die Zuordnung, wenn lediglich die auf Höhe des Knopfes angeordneten Abschnitte des Randbereiches der Anzeigeeinheit dem Betrachter im Knopf zugeordnet sind und andere Randbereiche anderen Knöpfen zugeordnet sind. Auf diese Weise ergibt sich insbesondere die Möglichkeit, eine Vielzahl bzw. sämtliche die Anzeigeeinheit säumenden Knöpfe erfindungsgemäß durch 3D-Gesten zu bedienen.

Das Ausgeben des Hinweises kann beispielsweise auf der Anzeigeeinheit ("dem Bildschirm") erfolgen, indem der dem Knopf zugeordnete Bereich optisch hervorgehoben wird. Beispielsweise kann auch eine optische Repräsentation des Knopfes auf dem Bildschirm angezeigt werden. Dies kann bevorzugt in dem dem Knopf zugeordneten Bereich und außerhalb desselben erfolgen, wobei optional andere Bildschirminhalte überlagert werden. Alternativ oder zusätzlich kann der Hinweis mittels eines elektroakustischen Wandlers ausgegeben werden. Alternativ oder zusätzlich kann der Knopf selbst optisch hervorgehoben werden. Im Stand der Technik werden Knöpfe, welche eine vordefinierte Funktion aufrufen, kostengünstig und betriebssicher mittels Licht-emittierender Dioden (LED) hintergrundbeleuchtet. Eine optische Hervorhebung des Knopfes kann daher beispielsweise durch eine Veränderung der Lichtfarbe und/oder - intensität erfolgen. Letzteres kann beispielsweise durch Modulierung der Energieversorgung zur Erzeugung eines Blinksignals erfolgen.

Nach Ablauf eines vordefinierten Zeitraumes kann der Hinweis beendet bzw. die Einblendung der optischen Repräsentation des Knopfes rückgängig gemacht werden. Bevorzugt kann hierbei die optische Repräsentation des Knopfes in umgekehrter Richtung entfernt werden, in welcher sie eingeblendet wurde. Mit anderen Worten kann bei einem rechts der Anzeigeeinheit angeordneten Knopf die optische Repräsentation nach links in den grafischen Inhalt der Anzeigeeinheit eingeschoben und nach Ablauf der vordefinierten Zeitdauer bzw. einem Austritt der Hand aus dem dem Knopf zugeordneten Bereich der Anwenderschnittstelle nach rechts hinausgeschoben werden.

Für die optische Darstellung der Repräsentation ergibt sich eine große Vielzahl von Gestaltungsmöglichkeiten, welche nachfolgend lediglich auszugsweise diskutiert wird. Die optische Repräsentation kann beispielsweise als (teilweise) transparente Überlagerung des sonstigen grafischen Inhaltes der Anzeigeeinheit überlagert werden. Auf diese Weise wird der temporäre Charakter der Einblendung hervorgehoben. Alternativ oder zusätzlich kann die optische Repräsentation animiert werden und hierbei unterschiedliche Transparenzwerte, wellenartige Bewegungen und/oder einen ortsveränderlichen Glanz oder "Glow" aufweisen. Zusätzlich zu den vorgenannten Gestaltungsmöglichkeiten, mittels welchen der temporäre Charakter der optischen Repräsentation unterstrichen wird, kann zusätzlich eine optisch ansprechende Gestaltung der Repräsentation erzielt werden.

Gemäß einem zweiten Aspekt der vorliegenden Erfindung wird eine Anwenderschnittstelle vorgeschlagen, welche einen Sensor zum Erkennen frei im Raum ausgeführter Gesten aufweist. Weiter ist eine Anzeigeeinheit (z.B. in Form einer Matrixanzeige oder "Bildschirm") ebenso wie eine Auswerteeinheit zum Erkennen einer Vielzahl von Gesten in Signalen des Sensors vorgesehen. Die Auswerteeinheit kann beispielsweise als elektronisches Steuergerät ausgestaltet sein und einen programmierbaren Prozessor umfassen. Ein neben der Anzeigeeinheit angeordnetes in Hardware ausgestaltetes Bedienelement ist mit zumindest einer vordefinierten Funktion belegt. Mit anderen Worten wird eine der Anzeigeeinheit gegebenenfalls überlagerte berührungsempfindliche Bedienoberfläche im Rahmen der vorliegenden Erfindung nicht als "Knopf verstanden. Erfindungsgemäß ist die Anwenderschnittstelle eingerichtet, im Ansprechen auf eine mittels der Auswerteeinheit erkannte Präsenz in einem dem Knopf zugeordneten 3D-Erfassungsbereich einen Hinweis an den Anwender auszugeben. Für die Merkmale, Merkmalskombination und die sich aus diesen ergebenden Vorteile der erfindungsgemäßen Anwenderschnittstelle gelten die in Verbindung mit dem erfindungsgemäßen Verfahren gemachten Ausführungen derart, dass zur Vermeidung von Wiederholungen auf die obigen Ausführungen verwiesen wird.

Gemäß einem dritten Aspekt der vorliegenden Erfindung wird ein Anwenderendgerät vorgeschlagen, welches beispielsweise ein mobiles elektronisches Gerät sein kann. Insbesondere werden elektronische Drahtloskommunikationsgeräte (Smartphones, Laptop, Netbook, Tablet-PC etc.) als erfindungsgemäß verwendbare Anwenderendgeräte verstanden. Eine Anwenderschnittstelle ist in das Anwenderendgerät integriert, mittels welcher das Anwenderendgerät zur Durchführung eines Verfahrens gemäß dem erstgenannten Erfindungsaspekt eingerichtet wird. Die Merkmale und Vorteile ergeben sich entsprechend.

Gemäß einem vierten Aspekt der vorliegenden Erfindung wird ein Computerprogrammprodukt (z.B. ein Datenspeicher) vorgeschlagen, auf welchem Instruktionen gespeichert sind, die einen programmierbaren Prozessor einer Anwenderschnittstelle in die Lage versetzen, die Schritte eines Verfahrens gemäß dem erstgenannten Erfindungsaspekt durchzuführen. Das Computerprogrammprodukt kann als CD, DVD, Blue-ray-Disk, Flash-Speicher, Festplatte, RAM/ROM, Cache etc. ausgestaltet sein.

Gemäß einem fünften Aspekt der vorliegenden Erfindung wird eine Signalfolge, repräsentierend Instruktionen vorgeschlagen, welche einen programmierbaren Prozessor einer Anwenderschnittstelle in die Lage versetzen, die Schritte eines Verfahrens gemäß dem erstgenannten Erfindungsaspekt durchzuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

Gemäß einem sechsten Aspekt der vorliegenden Erfindung wird ein Fortbewegungsmittel vorgeschlagen, welches beispielsweise als Pkw, Transporter, Lkw, Land- und/oder Wasserfahrzeug ausgestaltet sein kann. Das Fortbewegungsmittel umfasst eine Anwenderschnittstelle gemäß dem zweitgenannten Erfindungsaspekt, wobei die Anzeigeeinheit als fest in ein Armaturenbrett des Fortbewegungsmittels eingebauter zentraler Bildschirm und/oder als Kombiinstrument des Fortbewegungsmittels ausgestaltet ist. Auf diese Weise werden die in Verbindung mit der erfindungsgemäßen Anwenderschnittstelle erläuterten Merkmale, Merkmalskombinationen und die sich aus diesen ergebenden Vorteile durch das erfindungsgemäße Fortbewegungsmittel verwirklicht.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Übersicht über Komponenten eines Ausführungsbeispiels einer erfindungsgemäßen Anwenderschnittstelle in einem Ausführungsbeispiel eines erfindungsgemäßen Fortbewegungsmittels;
- Figur 2: eine schematische Übersicht über Komponenten eines zweiten Ausführungsbeispiels einer erfindungsgemäßen Anwenderschnittstelle in einem Ausführungsbeispiel eines erfindungsgemäßen Anwenderendgerätes;
- Figur 3: eine Darstellung eines ersten Bedienschrittes einer erfindungsgemäßen Anwenderschnittstelle;
- Figur 4: eine Auswahl möglicher Handgesten zur Bedienung einer erfindungsgemäßen Anwenderschnittstelle;
- Figur 5: eine Darstellung eines Bedienschrittes zur berührungslosen Bedienung eines Knopfes;
- Figur 6: eine Darstellung eines Bedienschrittes, welcher sich an den in Figur 5 dargestellten anschließt;
- Figur 7: eine Darstellung eines Bedienschrittes, welcher sich an den in Figur 6 dargestellten anschließt;
- Figur 8: eine Darstellung einer Anwenderinteraktion mit einer optischen Repräsentation eines ersten Knopfes;
- Figur 9: eine Darstellung einer Anwenderinteraktion mit einer optischen Repräsentation eines zweiten Knopfes;
- Figur 10: eine Darstellung eines Bedienschrittes zur berührungslosen Bedienung eines Knopfes gemäß einem zweiten Ausführungsbeispiel einer erfindungsgemäßen Anwenderschnittstelle;
- Figur 11: eine Darstellung eines Bedienschrittes, welcher sich an den in Figur 10 gezeigten anschließt; und
- Figur 12: ein Flussdiagramm veranschaulichend Schritte eines Ausführungsbeispiels eines erfindungsgemäßen Verfahrens.

### Ausführungsformen der Erfindung

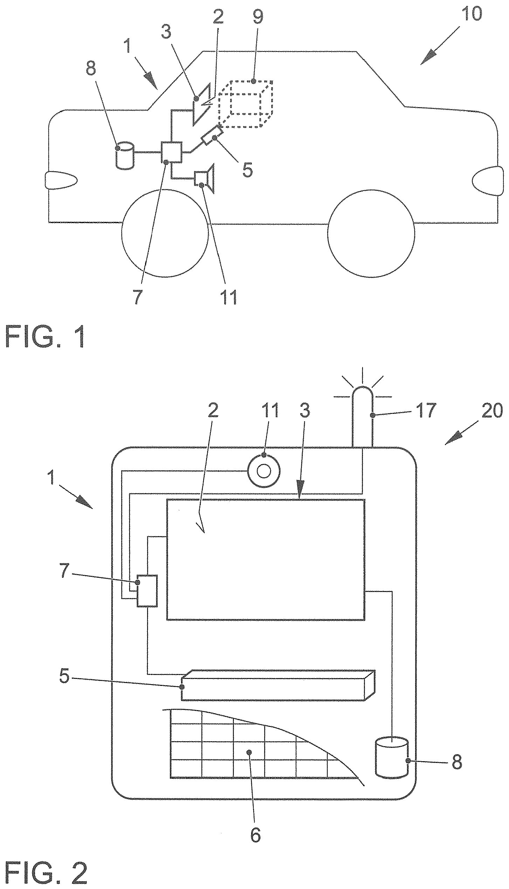

Figur 1 zeigt einen Pkw 10 als Fortbewegungsmittel, in welchem ein Bildschirm 3 als Anzeigeeinheit einer erfindungsgemäßen Anwenderschnittstelle 1 in das Armaturenbrett eingelassen ist. Unterhalb des Bildschirms 3 ist ein Sensor 5 angeordnet, welcher einen Erfassungsbereich 9 vor dem Bildschirm 3 im Raum aufspannt. Ein Lautsprecher 11 ist zur Ausgabe von Hinweisen an den Anwender vorgesehen. Schließlich ist auch ein Datenspeicher 8 zum Bereitstellen vordefinierter Referenzen für die Gestenerkennung enthalten. Die vorgenannten Komponenten sind an eine Auswerteeinheit in Form eines elektronischen Steuergerätes 7 informationstechnisch angebunden. Das elektronische Steuergerät 7 ist zudem für die Darstellung eines grafischen Inhaltes 2 in Form eines Menüs auf dem Bildschirm 3 eingerichtet.

Figur 2 zeigt eine Übersicht über Komponenten eines Ausführungsbeispiels einer erfindungsgemäßen Anwenderschnittstelle in einem Ausführungsbeispiel eines erfindungsgemäßen Anwenderendgerätes in Form eines Smartphones 20. Eine Tastatur 6 des Smartphones 20 ist teilweise freigeschnitten, um den Blick auf die hinter ihr liegenden Komponenten zu ermöglichen. Der Bildschirm 3 des Smartphones 20 stellt die Anzeigeeinheit, ein Mikroprozessor 7 die Auswerteeinheit, ein Flash-Speicher 8 das Speichermittel und ein Lautsprecher 11 einen Signalgeber der erfindungsgemäßen Anwenderschnittstelle 1 dar. Zusätzlich ist eine Infrarot-LED-Leiste 5 als Sensor mit dem Mikroprozessor 7 informationstechnisch verbunden. Letzterer ist auch mit einer Antenne 17 gekoppelt, um drahtlos mit einer Drahtlosinfrastruktur bzw. anderen Anwenderendgeräten zu kommunizieren.

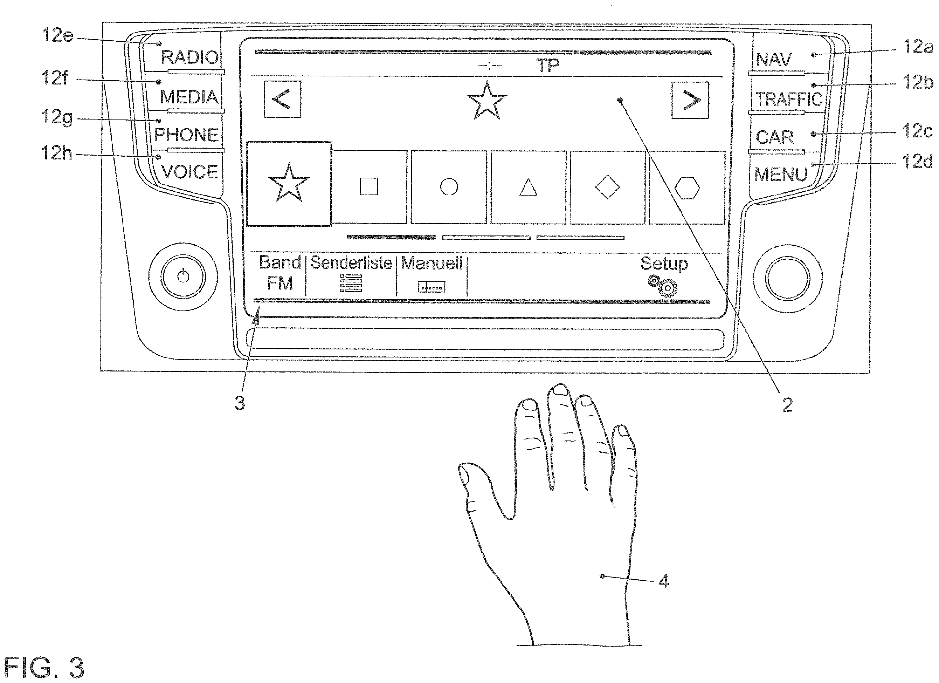

Figur 3 zeigt einen Bildschirm 3 als Anzeigeeinheit, auf welchem ein Menü 2 zur Auswahl eines Radiosenders dargestellt wird. Vor dem Bildschirm 3 befindet sich im Erfassungsbereich 9 des Sensors 5 (beide nicht dargestellt) eine Hand 4 eines Anwenders, mittels welcher der Anwender eine 3D-Geste zur Bedienung der Navigation ausführen möchte.

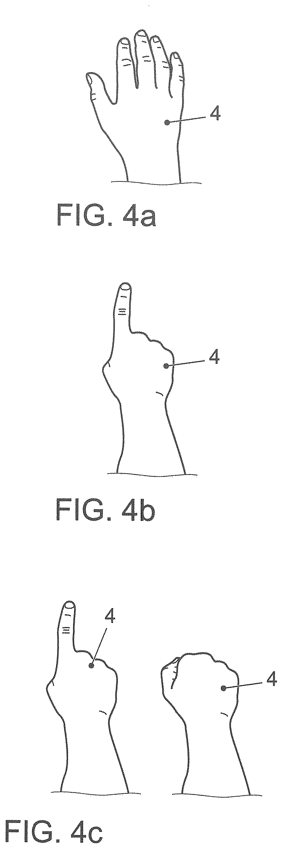

Figur 4 zeigt mögliche Handhaltungen und Gesten für die Interaktion mit einer erfindungsgemäßen Anwenderschnittstelle 1. In Teilfigur a weist die geöffnete Handfläche der Hand 4 in Richtung des Bildschirms 3. Die Finger der Hand 4 sind gestreckt und leicht gespreizt. In Teilfigur b ist eine Zeige-Geste der Hand 4 dargestellt, bei welcher lediglich der Zeigefinger der Hand 4 gestreckt ist, während die übrigen Finger zu einer Faust geballt sind. In Teilfigur c wird eine Tippgeste bzw. Klick-Geste veranschaulicht, in welcher der Zeigefinger der Hand 4 zunächst ausgestreckt ist und anschließend in Richtung des Bildschirms 3 zur Aktivierung einer mit einer Schaltfläche assoziierten Funktion abgeklappt wird.

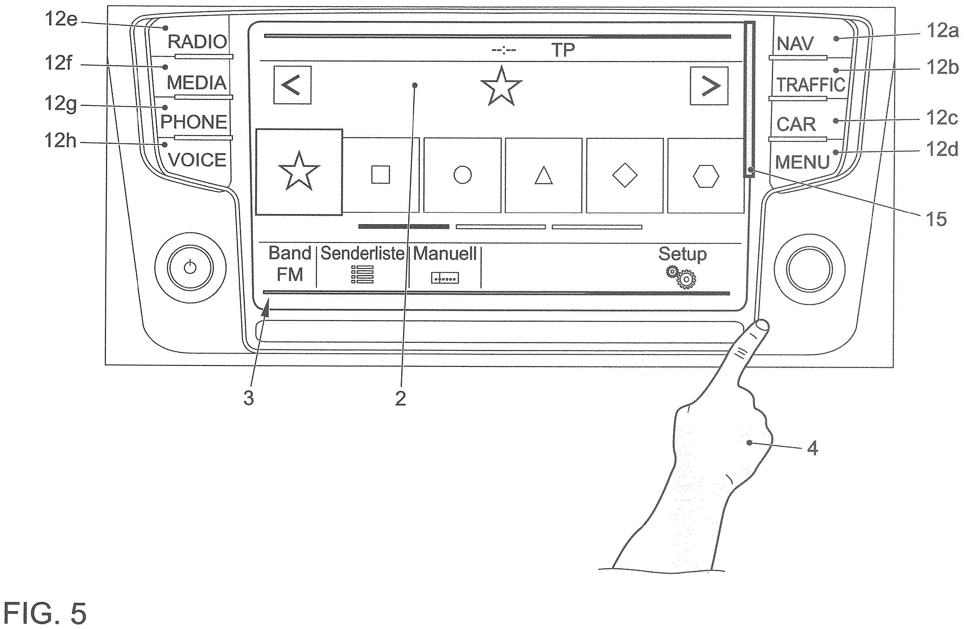

Figur 5 zeigt den Bildschirm 3 einer Anwenderschnittstelle, auf welchem ein Menü 2 zur Auswahl einer Radiostation als grafischer Inhalt dargestellt wird. Die Hand 4 des Anwenders befindet sich in einem rechten oberen Randbereich des (nicht dargestellten) Erfassungsbereiches. Diesem Bereich ist ein durch einen roten Rahmen 15 markierter Bereich auf dem Bildschirm 3 zugeordnet. Rechts neben diesem Bereich sind vier Knöpfe 12a, 12b, 12c, 12d angeordnet. Die Knöpfe 12a, 12b, 12c, 12d sind als Drucktasten den Funktionen "Navigation", "Verkehrsmeldungen", "Bordcomputer", "Hauptmenü" zugeordnet. Spiegelsymmetrisch sind links des Bildschirms 3 vier weitere Knöpfe 12e, 12f, 12g, 12h angeordnet, welche den Funktionen "Radio", "Medien", "Telefon" und "Sprachkommunikation" zugeordnet sind.

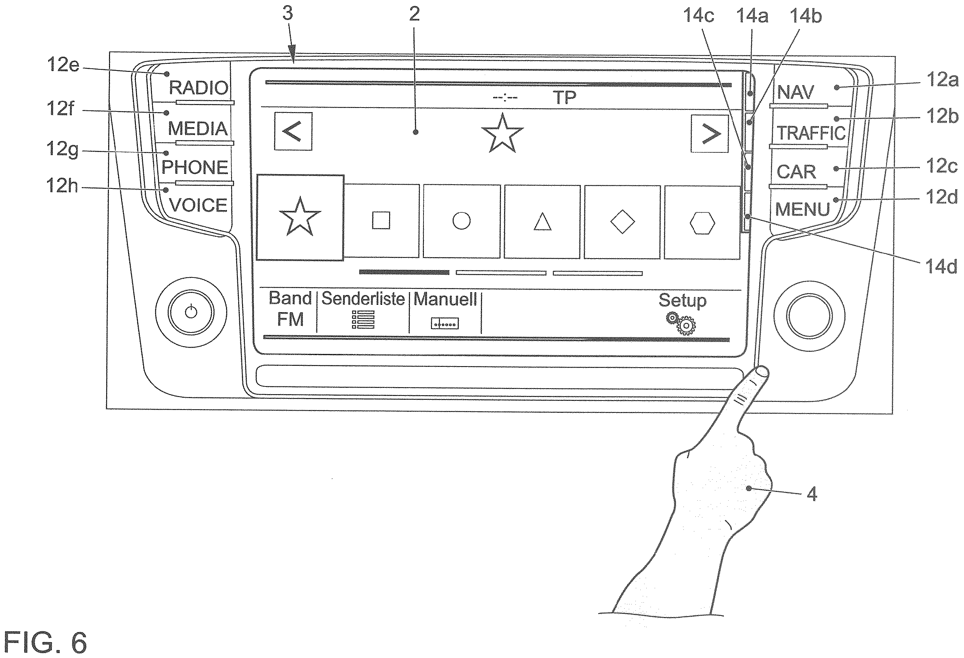

Figur 6 zeigt eine Möglichkeit zur Ausgabe eines Hinweises an den Anwender darüber, dass seine Hand 4 in dem den Knöpfen 12a, 12b, 12c, 12d zugeordneten Bereich der Anwenderschnittstelle verharrt. Im Ansprechen hierauf beginnt die (nicht dargestellte) Auswerteeinheit damit, eine optische Repräsentation 14a, 14b, 14c, 14d der Knöpfe 12a, 12b, 12c, 12d horizontal in das Menü 2 einzuschieben bzw. dem Menü 2 zu überlagern.

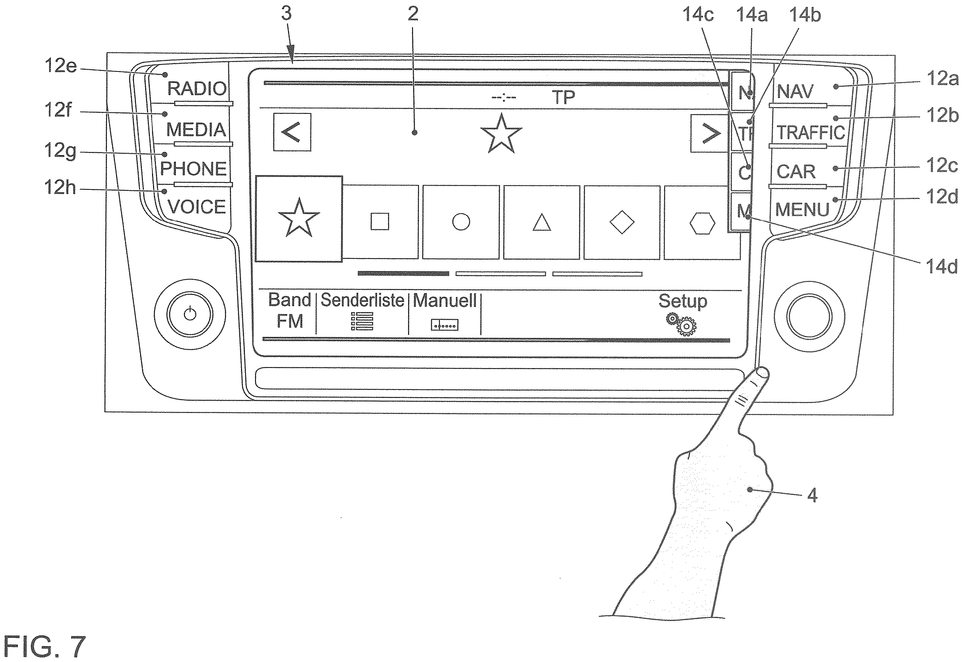

Figur 7 zeigt die in Figur 6 dargestellte Anordnung bei fortgeschrittenem Einschubvorgang.

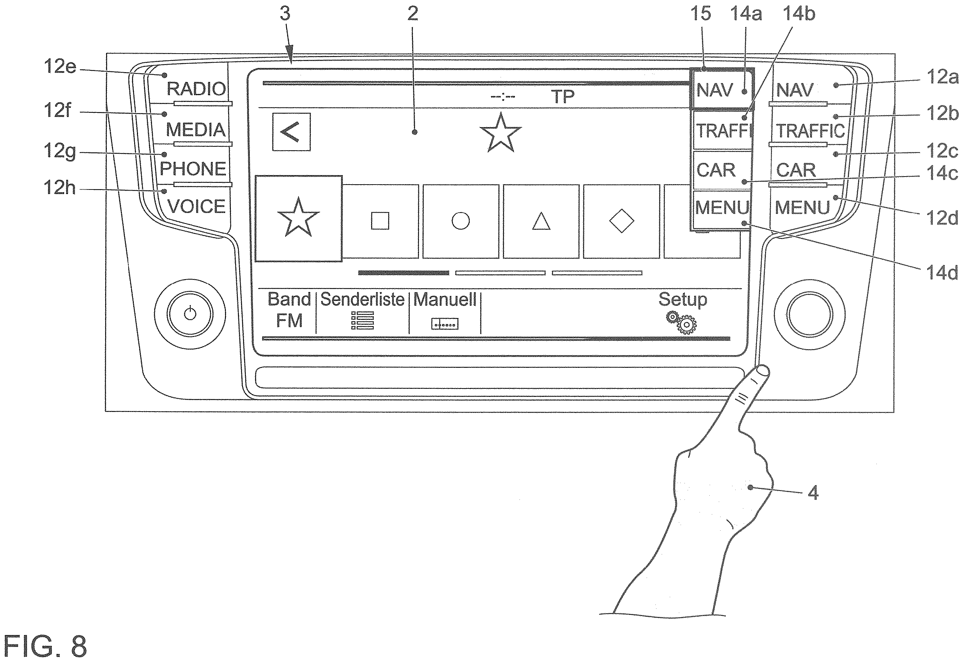

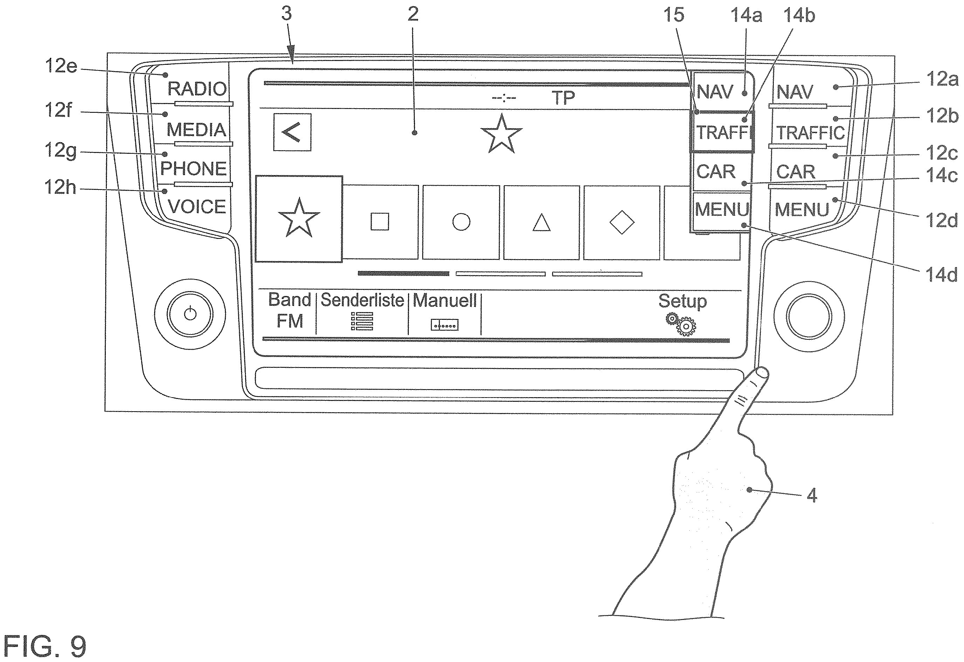

Figur 8 zeigt die in Figur 7 dargestellte Anordnung nach Abschließen des Einschubvorgangs. Die Repräsentationen 14a, 14b, 14c, 14d und die zugehörigen Knöpfe 12a, 12b, 12c, 12d befinden sich jeweils auf gleicher Höhe des Bildschirmrandes. Der oberste Knopf 12a wird durch die optische Repräsentation 14a symbolisiert. Zur Interaktion mit dem Knopf 12a bringt der Anwender seine Hand 4 in einen Teilbereich des Erfassungsbereiches, welcher der optischen Repräsentation 14a zugeordnet ist, was durch einen roten Rahmen 15 veranschaulicht wird. Hierbei symbolisiert der rote Rahmen 15 lediglich einen Vorgang, welcher im Bereich grafischer Anwenderschnittstellen auch als "Mouse-over-Event" bezeichnet wird. Sämtliche zur optischen Hervorhebung von Schaltflächen im Stand der Technik bekannten Maßnahmen können ergriffen werden, um den beschriebenen Vorgang auch für die optische Repräsentation 14a optisch zu quittieren. Zur Auswahl der mit der optischen Repräsentation 14a bzw. dem Knopf 12a assoziierten Funktion "Navigation" kann der Anwender nun eine Tipp-Geste bzw. eine Klick-Geste mit seiner Hand 4 ausführen. Alternativ kann der Anwender die Position seiner Hand 4 nach unten verändern, wodurch die in Figur 9 dargestellte, für die Verkehrsmeldungen entsprechende Ansicht entsteht.

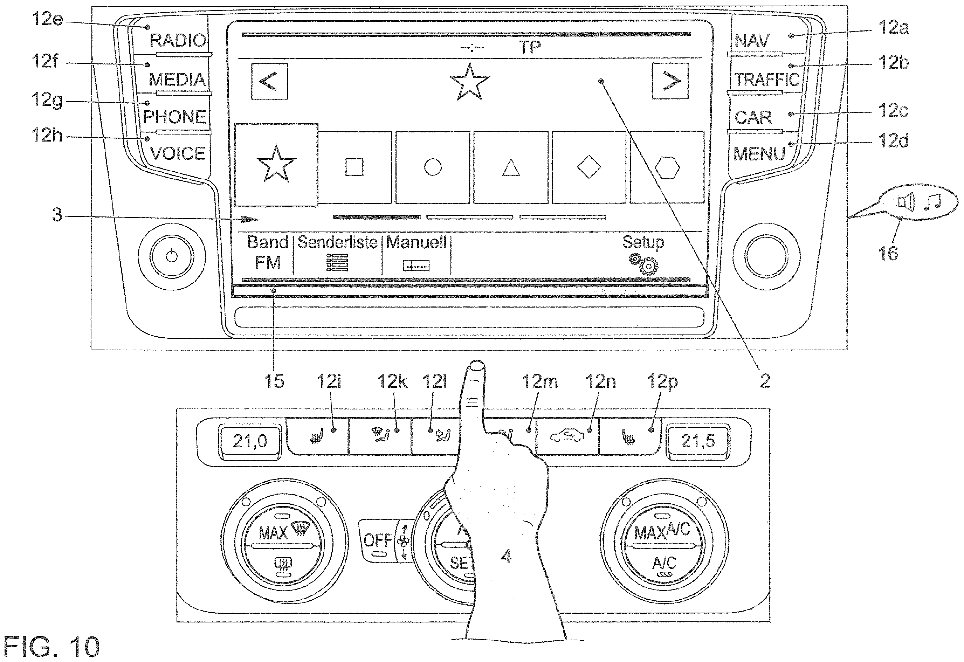

Figur 10 zeigt eine Ansicht eines Bedienschrittes mit einer alternativ ausgestalteten Anwenderschnittstelle. Der Anwender hat seine Hand 4 in einen unteren Bereich des (nicht dargestellten) Erfassungsbereiches gebracht, welcher einem unteren Bereich des Menüs 2 dem Bildschirm 3 zugeordnet ist. Dieser Bereich ist durch einen roten Rahmen 15 optisch hervorgehoben. Die unterhalb des Bildschirms 3 angeordneten Schaltflächen 12i, 12k, 12l, 12m, 12n und 12p sind einer Klimaanlage zugeordnet. Ein Lautsprecher/Notensymbol 16 veranschaulicht die Ausgabe eines akustischen Hinweises, mittels welchem der Anwender über den Eintritt seiner Hand 4 in den gekennzeichneten Bereich informiert wird.

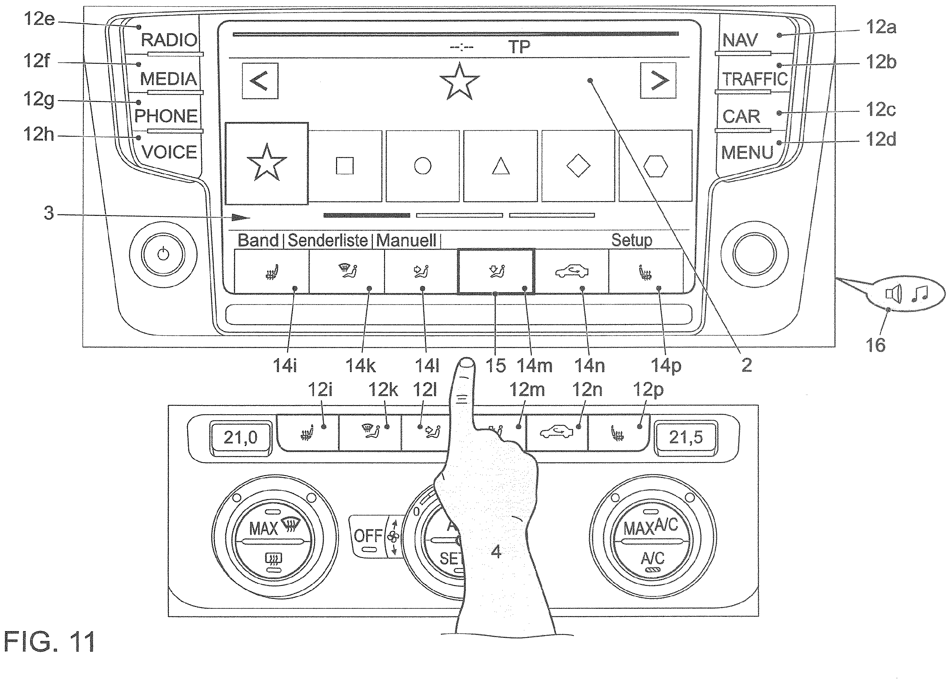

Figur 11 zeigt das Resultat eines Verharrens der Hand 4 des Anwenders in dem in Figur 10 hervorgehobenen Bereich. Hierbei ist die Hand 4 in einem Teilbereich des (nicht dargestellten) Erfassungsbereiches angeordnet, welcher der Luftverteilung für den Fußraum (siehe roter Rahmen 15) zugeordnet ist. Die Möglichkeit eines korrespondierenden Funktionsaufrufes wird erneut durch die Ausgabe eines akustischen Signals (symbolisiert durch das Lautsprecher/Notensymbol 16) angekündigt. Durch eine horizontale Bewegung könnte die Hand 4 des Anwenders auch optische Repräsentationen 14i, 14k, 14l, 14n oder 14p bedienen, um mit ihnen assoziierte Klimafunktionen zu steuern. Eine taktile Bedienung der in Hardware ausgestalteten Knöpfe 12i, 12k, 12l, 12m, 12n, 12p bleibt durch diese Option selbstverständlich unbenommen.

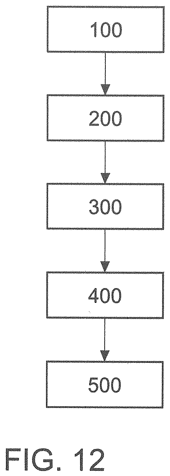

Figur 12 zeigt Verfahrensschritte eines Ausführungsbeispiels eines erfindungsgemäßen Verfahrens. Hierbei wird in Schritt 100 die Hand eines Anwenders sensorisch erfasst und in Schritt 200 einem dem Knopf einer Anwenderschnittstelle zugeordneten Bereich zugeordnet. Mit anderen Worten wird ermittelt, dass die Hand sich in einem solchen Bereich befindet, welcher für eine berührungslose Bedienung des Knopfes erfindungsgemäß vorgesehen ist. Im Ansprechen darauf wird in Schritt 300 ein Hinweis an den Anwender darüber ausgegeben, dass sich seine Hand im Bereich zur berührungslosen Bedienung des Knopfes befindet. Hierzu wird eine optische Repräsentation des Knopfes auf einem Bildschirm der Anwenderschnittstelle auf Höhe des Knopfes eingeblendet. In Schritt 400 wird eine vordefinierte Geste eines Anwenders in diesem Bereich detektiert, welche mit einer dem Knopf assoziierten Funktion verknüpft ist. Diese Geste kann beispielsweise eine Tipp-Geste bzw. Klick-Geste zur Betätigung der Repräsentation sein. Im Ansprechen auf diese vordefinierte Geste wird in Schritt 500 die mit dem Knopf assoziierte Funktion aufgerufen. Im Ergebnis ist ein in Hardware ausgestaltetes und für eine taktile Bedienung vorgesehenes Bedienelement allein durch Ausführung von 3D-Gesten für einen assoziierten Funktionsaufruf verwendet worden.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Anwenderschnittstelle
- 2: Menü
- 3: Bildschirm
- 4: Hand des Anwenders
- 5: Infrarot-LED-Leiste/Sensor
- 6: Tastatur
- 7: elektronisches Steuergerät/Prozessor
- 8: Datenspeicher
- 9: Erfassungsbereich
- 10: Pkw
- 11: Lautsprecher
- 12: Knopf
- 14: Optische Repräsentation
- 15: roter Rahmen
- 16: akustischer Hinweis
- 17: Antenne
- 20: Smartphone
- 100-500: Verfahrensschritte

## Patentansprüche

1. Verfahren zur berührungslosen Bedienung eines in Hardware ausgestalteten Bedienelementes (12), nachfolgend "Knopf" genannt, einer Anwenderschnittstelle (1) in einem 3D-Gesten-Modus, mittels welchem eine Bedienung der Anwenderschnittstelle (1) durch frei im Raum ausgeführte Gesten, nachfolgend 3D-Gesten genannt, erfolgen kann, umfassend:
- Erfassen (100) einer Hand eines Anwenders,
- Zuordnen (200) der Hand zu einem dem Knopf (12) zugeordneten Bereich der Anwenderschnittstelle (1), im Ansprechen darauf
- Ausgeben (300) eines Hinweises (14, 16) an den Anwender, dass seine Hand denjenigen Erfassungsbereich erreicht hat, welcher dem Knopf (12) zugeordnet ist, wobei das Verfahren **dadurch gekennzeichnet ist, dass** es weiter umfasst:
- Erkennen (400) einer vordefinierten Geste eines Anwenders in einem dem Knopf (12) zugeordneten Bereich, und
- Starten (500) einer mit dem Knopf (12) assoziierten Funktion.

2. Verfahren nach Anspruch 1, wobei der dem Knopf (12) zugeordnete Bereich in einem Randbereich des Erfassungsbereiches (9) und/oder einem Randbereich einer Anzeigeeinheit (3) der Anwenderschnittstelle (1) liegt.

3. Verfahren nach einem der vorstehenden Ansprüche, wobei der Knopf (12) benachbart zu einem Bildschirm der Anwenderschnittstelle (1) angeordnet ist.

4. Verfahren nach einem der vorstehenden Ansprüche, wobei das Ausgeben (300) des Hinweises (14, 16)
- auf einem Bildschirm und/oder
- mittels eines elektroakustischen Wandlers (11), und/oder
- mittels einer optischen Hervorhebung des Knopfes (12), insbesondere mittels einer LED, erfolgt.

5. Verfahren nach einem der vorstehenden Ansprüche, wobei der Hinweis (14, 16) eine Einblendung einer optischen Repräsentation (14) des Knopfes (12) auf einem Bildschirm (3) umfasst.

6. Verfahren nach Anspruch 5, wobei die Einblendung der optischen Repräsentation (14) in einem Randbereich (13) des Bildschirms (3) erfolgt, welcher dem Knopf (12) nächstliegend ist.

7. Verfahren nach Anspruch 5 oder 6, wobei die Einblendung der optischen Repräsentation (14) nach einem vordefinierten Zeitraum nach einem Verlassen des dem Knopf (12) zugeordneten Bereiches beendet wird.

8. Anwenderschnittstelle umfassend
- einen Sensor (5) zum Erkennen frei im Raum ausgeführter Gesten, nachfolgend 3D-Gesten genannt,
- eine Anzeigeeinheit (3),
- eine Auswerteeinheit (7) zum Erkennen einer Vielzahl von Gesten in Signalen des Sensors (5), und
- ein neben der Anzeigeeinheit (3) angeordnetes, in Hardware ausgestaltetes Bedienelement (12), nachfolgend "Knopf" genannt,
wobei die Anwenderschnittstelle (1) eingerichtet ist, im Ansprechen auf eine mittels der Auswerteeinheit (7) erkannte 3D-Geste in einem dem Knopf (12) zugeordneten Bereich einen Hinweis (14, 16) an den Anwender auszugeben (300), dass seine Hand denjenigen Erfassungsbereich erreicht hat, welcher dem Knopf (12) zugeordnet ist,
wobei die Anwenderschnittstelle **dadurch gekennzeichnet ist, dass** sie weiter eingerichtet ist eine vordefinierte Geste eines Anwenders in einem dem Knopf (12) zugeordneten Bereich zu erkennen und eine mit dem Knopf (12) assoziierte Funktion zu starten.

9. Anwenderschnittstelle nach Anspruch 8, wobei der Knopf (12) als Drehsteller, Schalter, Schieberegler o.ä. ausgestaltet ist.

10. Anwenderschnittstelle nach Anspruch 8 oder 9, wobei der Sensor (5) ein optischer Sensor und/oder ein im Infrarotbereich operierender Sensor ist.

11. Anwenderendgerät (20), insbesondere elektronisches Drahtloskommunikationsgerät, umfassend eine Anwenderschnittstelle (1) nach einem der Ansprüche 8 bis 10.

12. Computerprogrammprodukt umfassend Instruktionen, welche, wenn Sie auf einer Auswerteeinheit (7) einer Anwenderschnittstelle (1) nach einem der Ansprüche 8 bis 10 ausgeführt werden, die Auswerteeinheit (7) veranlassen, die Schritte eines Verfahrens nach einem der Ansprüche 1 bis 7 durchzuführen.

13. Signalfolge repräsentierend Instruktionen, welche, wenn Sie auf einer Auswerteeinheit (7) einer Anwenderschnittstelle (1) nach einem der Ansprüche 8 bis 10 ausgeführt werden, die Auswerteeinheit (7) veranlassen, die Schritte eines Verfahrens nach einem der Ansprüche 1 bis 7 durchzuführen.

14. Fortbewegungsmittel umfassend eine Anwenderschnittstelle (1) nach einem der Ansprüche 8 bis 10, wobei die Anzeigeeinheit (3) als fest in ein Armaturenbrett des Fortbewegungsmittels (10) eingebauter zentraler Bildschirm und/oder als Kombiinstrument des Fortbewegungsmittels (10) ausgestaltet ist.

## Claims

1. Method for contactless operation of a control element (12), subsequently called "button", which is configured in hardware, of a user interface (1) in a 3D gesture mode that can be used to operate the user interface (1) by means of gestures carried out freely in space, subsequently called 3D gestures, comprising:
- detecting (100) a hand of a user,
- assigning (200) the hand to an area of the user interface (1) that is associated with the button (12), responding thereto by
- outputting (300) advice (14, 16) to the user indicating that his hand has reached the detection area associated with the button (12), wherein the method is **characterized in that** it further comprises:
- recognizing (400) a predefined gesture of a user in an area associated with the button (12), and
- starting (500) a function associated with the button (12).

2. Method according to Claim 1, wherein the area associated with the button (12) lies in a marginal area of the detection area (9) and/or in a marginal area of a display unit (3) of the user interface (1).

3. Method according to either of the preceding claims, wherein the button (12) is arranged adjacently to a screen of the user interface (1).

4. Method according to one of the preceding claims, wherein the advice (14, 16) is output (300)
- on a screen and/or
- by means of an electroacoustic transducer (11), and/or
- by means of visual highlighting of the button (12), in particular by means of an LED.

5. Method according to one of the preceding claims, wherein the advice (14, 16) comprises showing a visual representation (14) of the button (12) on a screen (3).

6. Method according to Claim 5, wherein the visual representation (14) is shown in a marginal area (13) of the screen (3) that is closest to the button (12).

7. Method according to Claim 5 or 6, wherein the showing of the visual representation (14) is ended after a predefined period after the area associated with the button (12) is left.

8. User interface comprising
- a sensor (5) for recognizing gestures carried out freely in space, subsequently called 3D gestures,
- a display unit (3),
- an evaluation unit (7) for recognizing a multiplicity of gestures in signals from the sensor (5), and
- a control element (12), subsequently called "button", which is configured in hardware and arranged next to the display unit (3),
wherein the user interface (1) is geared to respond to a 3D gesture recognized by means of the evaluation unit (7) in an area associated with the button (12) by outputting (300) advice (14, 16) to the user indicating that his hand has reached the detection area associated with the button (12),
wherein the user interface is **characterized in that** it is further geared to
recognize a predefined gesture of a user in an area associated with the button (12) and
start a function associated with the button (12).

9. User interface according to Claim 8, wherein the button (12) is configured as a rotary control, switch, slide control or the like.

10. User interface according to Claim 8 or 9, wherein the sensor (5) is an optical sensor and/or a sensor operating in the infrared range.

11. User terminal (20), in particular electronic wireless communication device, comprising a user interface (1) according to one of Claims 8 to 10.

12. Computer program product comprising instructions that, when executed on an evaluation unit (7) of a user interface (1) according to one of Claims 8 to 10, prompt the evaluation unit (7) to perform the steps of a method according to one of Claims 1 to 7.

13. Signal sequence representing instructions that, when executed on an evaluation unit (7) of a user interface (1) according to one of Claims 8 to 10, prompt the evaluation unit (7) to perform the steps of a method according to one of Claims 1 to 7.

14. Means of transport comprising a user interface (1) according to one of Claims 8 to 10, wherein the display unit (3) is configured as a central screen permanently installed in a dashboard of the means of transport (10) and/or as a combination instrument of the means of transport (10).

## Revendications

1. Procédé de fonctionnement sans contact d'un élément de commande (12), se présentant sous forme matérielle et désigné ci-après par « bouton », d'une interface utilisateur (1) en mode gestuel 3D, lequel élément de commande permet le fonctionnement de l'interface utilisateur (1) par des gestes effectués librement dans l'espace, désignés ci-après par gestes 3D, le procédé comprenant les étapes suivantes :
- détecter (100) la main d'un utilisateur,
- associer (200) la main à une zone de l'interface utilisateur (1) associée au bouton (12), en réponse à cette association
- délivrer (300) à l'utilisateur une indication (14, 16) selon laquelle sa main a atteint la zone de détection qui correspond au bouton (12), le procédé étant **caractérisé en ce qu'**il comprend en outre les étapes suivantes :
- détecter (400) un geste prédéfini d'un utilisateur dans une zone associée au bouton (12), et
- démarrer (500) une fonction associée au bouton (12) .

2. Procédé selon la revendication 1, la zone associée au bouton (12) étant située dans une zone de bord de la zone de détection (9) et/ou une zone de bord d'une unité d'affichage (3) de l'interface utilisateur (1).

3. Procédé selon l'une des revendications précédentes, le bouton (12) étant disposé à côté d'un écran de l'interface utilisateur (1).

4. Procédé selon l'une des revendications précédentes, la délivrance (300) de l'indication (14, 16) étant effectuée
- sur un écran et/ou
- au moyen d'un transducteur électroacoustique (11), et/ou
- au moyen d'une mise en évidence optique du bouton (12), notamment au moyen d'une DEL.

5. Procédé selon l'une des revendications précédentes, l'indication (14, 16) comprenant un affichage en surimpression d'une représentation optique (14) du bouton (12) sur un écran (3).

6. Procédé selon la revendication 5, l'affichage en surimpression de la représentation optique (14) étant effectué dans une zone de bord (13) de l'écran (3) qui est la plus proche du bouton (12).

7. Procédé selon la revendication 5 ou 6, l'affichage en surimpression de la représentation optique (14) étant terminé au bout d'une durée prédéfinie après la sortie de la zone associée au bouton (12).

8. Interface utilisateur comprenant
- un capteur (5) destiné à reconnaître des gestes effectués librement dans l'espace, désignés ci-après par gestes 3D,
- une unité d'affichage (3),
- une unité d'évaluation (7) destinée à détecter une multitude de gestes dans les signaux du capteur (5), et
- un élément de commande (12), disposé à côté de l'unité d'affichage (3), se présentant sous forme matérielle et désigné ci-après par « bouton »,
l'interface utilisateur (1) étant conçue pour délivrer à l'utilisateur (300), en réponse à un geste 3D détecté par l'unité d'évaluation (7) dans une zone associée au bouton (12), une indication (14, 16) selon laquelle sa main a atteint la zone de détection associée au bouton (12),
l'interface utilisateur étant **caractérisée en ce qu'**elle est en outre conçue pour détecter un geste prédéfini d'un utilisateur dans une zone associée au bouton (12) et pour démarrer une fonction associée au bouton (12).

9. Interface utilisateur selon la revendication 8, le bouton (12) étant conçu comme un actionneur rotatif, un commutateur, un curseur ou analogue.

10. Interface utilisateur selon la revendication 8 ou 9, le capteur (5) étant un capteur optique et/ou un capteur fonctionnant dans le domaine infrarouge.

11. Terminal utilisateur (20), notamment dispositif électronique de communication sans fil, comprenant une interface utilisateur (1) selon l'une des revendications 8 à 10.

12. Progiciel comprenant des instructions qui, lorsqu'elles sont exécutées sur une unité d'évaluation (7) d'une interface utilisateur (1) selon l'une des revendications 8 à 10, amènent l'unité d'évaluation (7) à réaliser les étapes d'un procédé selon l'une des revendications 1 à 7.

13. Séquence de signaux représentant des instructions qui, lorsqu'elles sont exécutées sur une unité d'évaluation (7) d'une interface utilisateur (1) selon l'une des revendications 8 à 10, amènent l'unité d'évaluation (7) à réaliser les étapes d'un procédé selon l'une des revendications 1 à 7.

14. Moyen de déplacement comprenant une interface utilisateur (1) selon l'une des revendications 8 à 10, l'unité d'affichage (3) étant conçue comme un écran central intégré dans un tableau de bord du moyen de déplacement (10) et/ou comme un combiné d'instruments du moyen de déplacement (10).
